# EUROPÄISCHE PATENTSCHRIFT

(11) **EP 2 396 158 B1**
(45) Veröffentlichungstag und Bekanntmachung des Hinweises auf die Patenterteilung: **02.05.2018**
(21) Anmeldenummer: 10709957.4
(22) Anmeldetag: 12.02.2010
(51) Int. Cl.: B29C 39/02, B29C 39/10, B29C 33/14, B29C 39/26, B29C 33/40

(54) **VERFAHREN UND FORMNEST ZUR HERSTELLUNG EINER LED-LEUCHTE**
METHOD AND MOULD FOR PRODUCING AN LED LIGHT
PROCÉDÉ ET MOULE DE FABRICATION D'UN LUMINAIRE À DIODES

(30) Priorität: 13.02.2009 DE 102009008947
(43) Veröffentlichungstag der Anmeldung: 21.12.2011
(73) Patentinhaber: Titze, Michael, 42719 Solingen (DE); LED Linear GmbH, 47506 Neukirchen-Vluyn (DE)
(72) Erfinder: SCHAFFARZ, Carsten, 47506 Neukirchen-Vluyn (DE); TITZE, Michael, 40822 Mettmann (DE); KRAMER, Dagmar Bettina, 47475 Kamp-Lintfort (DE)
(74) Vertreter: Cohausz Hannig Borkowski Wißgott
(86) Internationale Anmeldenummer: PCT/EP2010/000873
(87) Internationale Veröffentlichungsnummer: WO 2010/091873

(56) Entgegenhaltungen:
- JP-A- 7 226 537
- JP-A- 7 283 441
- JP-A- 9 102 633
- JP-A- 2008 255 327
- US-A1- 2006 290 026

## Beschreibung

Die Erfindung betrifft ein Verfahren zur Herstellung einer LED-Leuchte, bei dem wenigstens ein LED-Band zur Ausbildung eines Gehäuses allseitig mit wenigstens einer Vergussmasse vergossen wird, wobei das LED-Band einen flexiblen Leitungsträger mit darauf angeordneten Chip-Leuchtdioden, Leiterbahnen und elektronische Komponenten umfasst.

Im Stand der Technik sind sogenannte LED-Bänder bekannt, die eine Vielzahl von Chip-Leuchtdioden umfassen, welche auf einem flexiblen Leitungsträger (FCB - flexible circuit boeard) angeordnet und elektronisch verschaltet sind. Die elektronische Verschaltung kann dabei beispielsweise neben den Leiterbahnen auch elektronische Komponenten, wie insbesondere Konstantstromquellen etc. umfassen.

Solche LED-Bänder werden immer häufiger als Ersatz für bislang übliche Leuchtmittel eingesetzt, wobei insbesondere auch Anwendungen in Feuchträumen oder dem Außenbereich gewünscht sind. Aus diesem Grund ist es bekannt, LED-Bänder der eingangs genannten Art allseitig mit einer Vergussmasse zu umgießen, wobei eine solche Vergussmasse in einer bevorzugten Ausführung auch ihrerseits nach dem Aushärten flexibel sein kann, so dass sich hierdurch ein wasserdichtes eingehäustes LED-Band ergibt, welches für eine Vielzahl von Anwendungen eingesetzt werden kann, insbesondere aufgrund seiner Flexibilität, die es gestattet, solche flexibel eingehäuste LED-Bänder in eine Vielzahl von Formen zu bringen. Das Dokument CN101060733A beschreibt ein derart allseitig mit einer Vergussmasse umgossenes LED-Band. Ein bekanntes Verfahren zum Vergießen solcher LED-Bänder sieht beispielsweise vor, dass in eine Gussform, welche die spätere äußere Form der Einhäusung definiert, zunächst eine erste Schicht einer Vergussmasse eingefügt wird und nach dem Aushärten dieser Vergussmasse ein LED-Band auf diese erste Schicht, insbesondere mit einem Kleber, befestigt wird, um ein Verrutschen des LED-Bandes beim weiteren Vergießen zu verhindern. Nach dem Befestigen des LED-Bandes wird demnach die Gussform mit der Vergussmasse weiter ausgefüllt, so dass sich die neu hinzugefügte Vergussmasse mit der ausgehärteten vorherigen Vergussmasse verbindet und dabei das LED-Band allseitig umschlossen wird.

Dieses bekannte Verfahren hat dabei den Nachteil, dass LED-Bänder vor dem Einsetzen rückseitig mit einer Klebeschicht versehen werden müssen, um die sichere Positionierung auf der bereits ausgehärteten Schicht zu gewährleisten. Diese Klebeschicht jedoch behindert den Abtransport von Wärme, die im Betrieb eines solchen LED-Bandes entsteht, so dass es gegebenenfalls zu Überhitzungen kommen kann. Bei einem Verzicht auf den zusätzlichen Kleber besteht hingegen die Gefahr, dass das LED-Band nicht ausreichend positioniert und und nicht ausreichend lagestabil ist und demnach keine hermetische Versiegelung erzielt wird oder das LED-Band nicht dem Vergießen schief im Gehäuse liegt. Darüber hinaus besteht weiterhin die Gefahr, dass bei einem nicht planen Aufliegen des LED-Bandes auf der bereits ersten ausgehärteten Schicht Luftblasen mit eingeschlossen werden können.

Es ist daher die Aufgabe der Erfindung, ein Verfahren zur Herstellung einer LED-Leuchte bereit zu stellen, bei welcher ein LED-Band der eingangs genannten Art allseitig eingehäust und demnach wasserdicht versiegelt wird und mit welchem die Möglichkeit besteht, ein LED-Band positionsgenau innerhalb des zu erstellenden Gehäuses anzuordnen, ohne das Risiko von eingeschlossenen Luftblasen bzw. den Nachteil den Wärmetransport behindernder Kleber in Kauf nehmen zu müssen.

Die Aufgabe wird in einem Verfahren gemäß der Erfindung nach Anspruch 1 dadurch gelöst, dass in einem ersten Verfahrensschritt wenigstens eine ein LED-Band an einer ersten Seite, insbesondere oberseitig formschlüssig aufnehmende flexible Gehäuseschale gegossen wird und dass in einem zweiten Verfahrensschritt die gegossene flexible Gehäuseschale mit einer flexiblen Vergussmasse, bis zu ihrer im ersten Verfahrensschritt definierten Oberkante aufgefüllt wird, die sich beim Auffüllen an die zweite Seite des LED-Bandes, insbesondere unterseitig und seitlich formschlüssig an das LED-Band anlegt.

Dabei wird zur Durchführung des ersten Verfahrensschrittes ein LED-Band mit seiner zweiten Seite, nämlich der Unterseite in eine der Länge des zu vergießenden LED-Bandes entsprechenden Führungsnut mit zwei parallelen Nutwänden formschlüssig, insbesondere klemmend eingelegt, die in einer Negativform der durch das Gießen herzustellenden Gehäuseschale in einem flexiblen Formnest ausgebildet ist und wonach die Negativform bzw. das flexible Formnest oberflächenbündig mit einer flexibel aushärtenden Vergussmasse aufgefüllt wird, die sich formschlüssig an die erste Seite, die Oberseite des eingelegten LED-Bandes anlegt.

So wird durch diese erfindungsgemäßen Verfahrensschritte sicher gestellt, dass zum einen das LED-Band bereits im ersten Schritt des Vergießens zuverlässig fixiert wird und demnach beim zweiten Schritt des Vergießens keinerlei Gefahr einer Fehlpositionierung oder der Ausbildung von Luftblasen besteht, wobei weiterhin beim zweiten Schritt des Vergießens die im ersten Schritt hergestellte Gehäuseschale die weitere Gießform zur Ausbildung des gesamten Gehäuses darstellt.

Darüber hinaus wird mit diesem Verfahren auch bereits beim ersten Verfahrensschritt eine sichere Positionierung des LED-Bandes sicher gestellt, da es vorgesehen ist, dieses in einer Führungsnut, die in der Negativform der Gehäuseschale bzw. dem flexiblen Formnest angeordnet ist, einzulegen, wobei es in einer bevorzugten Ausführungsform vorgesehen sein kann, dass dieses Einlegen klemmend erfolgt, dass also beispielsweise die genannten Nutwände, die in der Negativform im flexiblen Formnest ausgebildet sind, aufgrund ihrer Flexibilität bzw. Elastizität beim Einlegen des LED-Bandes und hier insbesondere des Leitungsträgers, leicht zurückweichen und sodann die seitlichen Kanten des flexiblen Leitungsträgers klemmend festhalten, insbesondere umgreifen. Hierfür kann es vorgesehen sein, dass die Breite der Führungsnut - insbesondere geringfügig - kleiner ausgebildet ist als die Breite des flexiblen Leitungsträgers.

Zur Durchführung des Verfahrens ist es dabei erfindungsgemäß vorgesehen, nach Anspruch 10 ein besonderes Formnest, umfassend wenigstens eine Negativform zur Abformung mit einer Vergussmasse einzusetzen, welches aus einem flexiblen gegossenen Körper besteht und wenigstens eine, insbesondere rechtwinklige Ausnehmung aufweist mit zwei parallelen, einander gegenüberliegenden langen Seitenwänden und zwei parallelen, einander gegenüberliegenden kurzen Seitenwänden und mit einem Boden, von dem beabstandet zu allen Seitenwänden eine Erhebung aufsteht mit einer planen, rechtwinkligen Bodenfläche, die entlang ihrer Längserstreckung von zwei parallelen, einander gegenüberliegenden Wänden zur Ausbildung einer Nut begrenzt ist, wobei der Abstand der einander gegenüberliegenden Wände angepasst ist an die Breite eines LED-Bandes, welches auf die Bodenfläche zwischen die Wände auflegbar ist.

Dieses so eingesetzte Formnest ermöglicht demnach, wie in den vorhergenannten Verfahrensschritten beschrieben, das LED-Band auf die Bodenfläche der im Formnest ausgebildeten Nut, mit seiner Unterseite zu legen und demnach sicher zu positionieren.

Verfahrensgemäß ist es beim Vergießen sodann vorgesehen, dass beim Einfüllen der Vergussmasse in die Negativform bzw. das flexible Formnest im ersten Verfahrensschritt die Vergussmasse in einen den Nutboden bzw. die zuvor genannte Bodenfläche des Formnestes und die beiden Nutwände, insbesondere allseitig außen umgebenden Graben einläuft, dessen Grabengrund im Formnest tiefer liegt als der Nutboden, auf dem das LED-Band liegt, wobei der Grabengrund die Oberkante der Gehäuseschale definiert.

Gerade durch die Ausbildung des allseitig umlaufenden Grabens und insbesondere dessen äußeren Begrenzungswänden wird die äußere Form der hierdurch hergestellten Gehäuseschale und die Oberkante derselbigen definiert, bis zu der in dem eingangs genannten zweiten Verfahrensschritt das weitere Auffüllen mit einer Vergussmasse erfolgt.

Insbesondere um ein sicheres Befüllen dieses Grabens zu gewährleisten, kann es in einer Ausführungsform des Formnestes vorgesehen sein, dass in der jeweiligen Negativform, von denen ein Formnest wenigstens eine, gegebenenfalls mehrere, parallel zueinander verlaufende aufweisen kann, die Wände der Führungsnut Durchbrüche aufweisen. Diese Durchbrüche können beispielsweise von der Wandoberseite bis zur Bodenfläche, d.h. dem Nutboden, verlaufen.

Es wird so gewährleistet, dass beim Einfüllen der Vergussmasse in die Negativform, insbesondere dann, wenn diese Vergussmasse zentrisch, bezogen auf die Breite in die Negativform eingefüllt wird, die auf die erste Seite, insbesondere Oberseite des LED-Bandes auftreffende Vergussmasse sich zum einen über diese Oberfläche ausbreitet und die Oberfläche insbesondere dann, wenn die Oberfläche diejenige Fläche ist, auf welcher die elektronischen Komponenten auf dem Leitungsträger angeordnet sind, vollständig mit der Vergussmasse überdeckt wird, diese also formschlüssig aufnimmt und weiterhin, dass die Vergussmasse an mehreren Stellen, nämlich dort, wo die Aussparungen in der Führungsnut sind, durch diese Aussparungen in den Graben einlaufen kann und demnach den Graben, ausgehend von mehreren Punkten, von unten heraus ausfüllt, so dass der Einschluss von Luftblasen in dem Graben sicher vermieden werden kann.

Um dabei das sichere formschlüssige Umgießen der ersten Seite, nämlich der Oberseite des LED-Bandes zu gewährleisten, kann es vorgesehen sein, dass die Höhe der Wände über der Bodenfläche der Führungsnut größer ist als die Dicke des flexiblen Leitungsträgers eines LED-Bandes. Dies bewirkt, dass beim Vorgang des Auffüllens, insbesondere wenn diese, wie eingangs genannt, zentrisch entlang einer Mittenachse, bezogen auf die Breite der Negativform durchgeführt wird, sich zunächst die Vergussmasse innerhalb der Führungsnut ausbreitet und erst nach Auffüllen derselbigen über die Oberkante der Führungsnut übertritt, abgesehen von dem gegebenenfalls bewusst vorgesehenen Durchbrüchen, wie sie zuvor beschrieben wurden. Hierbei kann die Höhe der Wände über der Bodenfläche beispielsweise 1 - 20% größer sein als die Dicke des flexiblen Leitungsträgers. Hierdurch wird bereits das sichere Vergießen gewährleistet und dennoch ein grundsätzlich kleinbauender Aufbau realisiert.

Das Formnest selbst kann weiterhin parallel zur Längserstreckung einer Negativform einen Kanal im Formnest aufweisen. Dieser Kanal ist bevorzugt mittig, bezogen auf die Breite der Negativform angeordnet und mündet demnach ebenso mittig in eine der kurzen Seitenwände der eingangs beschriebenen Ausnehmung der Negativform, so dass in diesen Kanal beispielsweise ein Anschlusskabel eines LED-Bandes zur Stromversorgung eingelegt werden kann, welches nach dem vollständig durchgeführten Gießvorgang, d.h. dem Abschluss beider eingangs genannter Verfahrensschritte, demnach aus dem fertig hergestellten Gehäuse herausragt, dabei aber seinerseits vollständig wasserdicht umgossen ist.

Das hier beschriebene Formnest ist bevorzugterweise selbst durch Abformen aus einer Metallgussform mittels einer flexibel aushärtenden Vergussmasse hergestellt. Dies hat den Vorteil, dass die Metallgussform zunächst beispielsweise durch spanende Bearbeitung eines Metallblockes hergestellt sein kann und die Positivform von wenigstens einer der durch das Gießen herzustellenden Gehäuseschale aufweist.

Hier kann es ebenso vorgesehen sein, parallel nebeneinander mehrere Positivformen von Gehäuseschalen durch spanende Bearbeitung in die Metallgussform einzubringen, um so im späteren Gießverfahren gleichzeitig mehrere Gehäuseschalen herstellen zu können.

Der Vorteil, der sich hier ergibt, ist, dass zunächst mit einer sehr hohen Genauigkeit bei der spanenden Bearbeitung die Gehäuseschalenform erstellt werden kann, insbesondere exakt nach Vorgaben aus einer CNC-Steuerung. Gegenüber der Anfertigung einer Negativform in einem Metallblock hat die Anfertigung der Positivform in dem Metallblock den Vorteil, dass diese Positivform nun ihrerseits mit einer flexibel aushärtenden Vergussmasse ausgefüllt werden kann, um sodann nach dem Aushärten statt einer starren Metallgussform nunmehr eine flexible Gussform; bzw. flexibles Formnest zur Verfügung zu haben, welche die Negativform der Gehäuseschale darstellt und nunmehr in den weiteren Verfahrensschritten, insbesondere dem eingangs genannten ersten Verfahrensschritt, zur Abformung der Gehäuseschale verwendet werden kann.

Hier ist gerade der Vorteil des flexiblen Formnests gegenüber der metallenen festen Gussform derjenige, dass zum einen eine wesentlich leichtere Entformung nach dem Aushärten stattfindet und dass zum anderen das Formnest selbst aus einem im Wesentlichen nicht haftenden Material hergestellt werden kann, so dass sich auch hierdurch die Entformungsprozesse vereinfachen.

Verfahrensgemäß kann es weiterhin vorgesehen sein, dass im ersten und/oder zweiten Verfahrensschritt eine Vergussmasse mittels eines Applikationskopfes eingefüllt wird. Das Einfüllen erfolgt hier je nach Verfahrensschritt entweder in die Negativform bzw. das genannte flexible Formnest oder aber nach Erstellen der Gehäuseschale direkt in diese. Dabei kann es in einer Ausführung erfindungsgemäß vorgesehen sein, dass der Applikationskopf, der das Einfüllen vornimmt, während dieses Einfüllens automatisch mittels einer übergeordneten Steuerung an der Negativform bzw. dem Formnest bzw. der Gehäuseschale je nach durchzuführendem Verfahrensschritt entlanggeführt wird. Es kann so beispielsweise die Verfahrgeschwindigkeit des Applikationskopfes sowie auch die Füllgeschwindigkeit mit der Vergussmasse aneinander angepasst werden, um zu gewährleisten, dass die Negativform bzw. das Formnest oder im zweiten Schritt die Gehäuseschale optimal ohne Blasenbildung fortlaufend entlang der Längserstreckung aufgefüllt wird. Grundsätzlich kann auch manuell gefüllt werden.

Dabei wird es als weiterhin vorteilhaft angesehen, wenn eine Vergussmasse kurz vor oder im Applikationskopf aus wenigstens zwei Komponenten gemischt wird. So ergeben sich geringe Totvolumina der aushärtenden Vergussmasse und eine geringe Wartungsanfälligkeit.

Beispielsweise kann zum Ende eines Vergießens die Zuführung einer der beiden Komponenten gestoppt werden, so dass der Mischbereich des Applikationskopfes lediglich nur noch von einer Komponente durchflossen ist und somit ein Aushärten der Komponenten innerhalb des Applikationskopfes sicher vermieden wird. Zum Beginn eines Einfüllvorgangs kann es dementsprechend weiterhin vorgesehen sein, zunächst beide Komponenten zuzuführen, um so die alleinige im Applikationskopf vorherrschende Komponente zunächst zu verdrängen, die Mischung entsprechend einem vorgegebenen Mischungsverhältnis herzustellen und dann die gemischte Vergussmasse zu applizieren.

Es kann dabei ebenso weiterhin vorgesehen sein, neben dem Vermischen von wenigstens zwei Komponenten auch weitere Komponenten in eine Vergussmasse einzumischen, insbesondere Komponenten, die eine gewünschte Funktionalität bereitstellen, wie beispielsweise Einfluss nehmen auf die thermische Leitfähigkeit der herzustellenden Vergussmasse oder der farblichen Erscheinung bzw. allgemein der Transparenz der Massen.

So kann es beispielsweise vorgesehen sein, dass für das Vergießen im ersten und zweiten Verfahrensschritt entweder gleiche bzw. identische Vergussmassen oder in einer alternativen Ausführungsform auch verschiedene flexible aushärtende Vergussmassen verwendet werden. In einer Weiterbildung kann für das Vergießen im ersten und zweiten Schritt auch dieselbe flexibel aushärtende Vergussmasse, insbesondere aus den gleichen Grundkomponenten verwendet werden, wobei die Vergussmasse bei wenigstens einem der Verfahrensschritte eine zugemischte Funktionskomponente aufweist.

Beispielsweise können in eine Vergussmasse Partikel eingemischt werden, die die Wärmeleitfähigkeit der Vergussmasse verbessern oder es wird insgesamt eine Vergussmasse mit besserer Wärmeleitfähigkeit verwendet. Insbesondere kann es dabei vorgesehen sein, eine solche Vergussmasse im zweiten Verfahrensschritt einzusetzen, bei welchem das Vergießen an der zweiten Seite, insbesondere der Unterseite des Leuchtbandes erfolgt. An einer Unterseite, die den auf dem Leitungsträger angeordneten Komponenten gegenüberliegt, kann bevorzugt die entstehende Wärme im Betrieb des LED-Bandes durch die Vergussmasse mit der verbesserten Wärmeleitfähigkeit abgeführt werden.

Andererseits kann beispielsweise im ersten Verfahrensschritt auch die Vergussmasse eine die Transparenz beeinflussende Komponente, insbesondere Pigmente, aufweisen: Hier kann es beispielsweise vorgesehen sein, die Vergussmasse einzufärben oder auch opak auszugestalten durch Einmischung von Streuteilchen, z.B. weißen Pigmenten, wie beispielsweise Titandioxid, um so einen starken Streueffekt beim Durchtritt des Lichtes durch diese Vergussmasse zu erzielen. Selbstverständlich kann eine solche Vergussmasse auch bei beiden Verfahrensschritten zum Einsatz kommen.

Ebenso können in eine Vergussmasse beim Durchführen des ersten und/oder zweiten Verfahrensschrittes Komponenten, insbesondere Partikel/Pigmente eingemischt werden, die einen Nachleuchteffekt, insbesondere eine Fluoreszenz oder Lumineszenz bewirken bzw. aufweisen. Grundsätzlich können beliebige hier nicht explizit genannte Komponenten eingefügt werden.

Ein bevorzugtes Ausführungsbeispiel der Erfindung ist in den nachfolgenden Figuren dargestellt. Es zeigen:
- Figur 1: das Verfahren zur Herstellung der Gehäuseunterschale mit darin oberseitig eingegossenem LED-Band
- Figur 2: die Entformung der Gehäuseschale und Auffüllung gemäß dem zweiten Verfahrensschritt
- Figur 3: eine Metallgussform zur Herstellung des Formnestes gemäß Figur 1

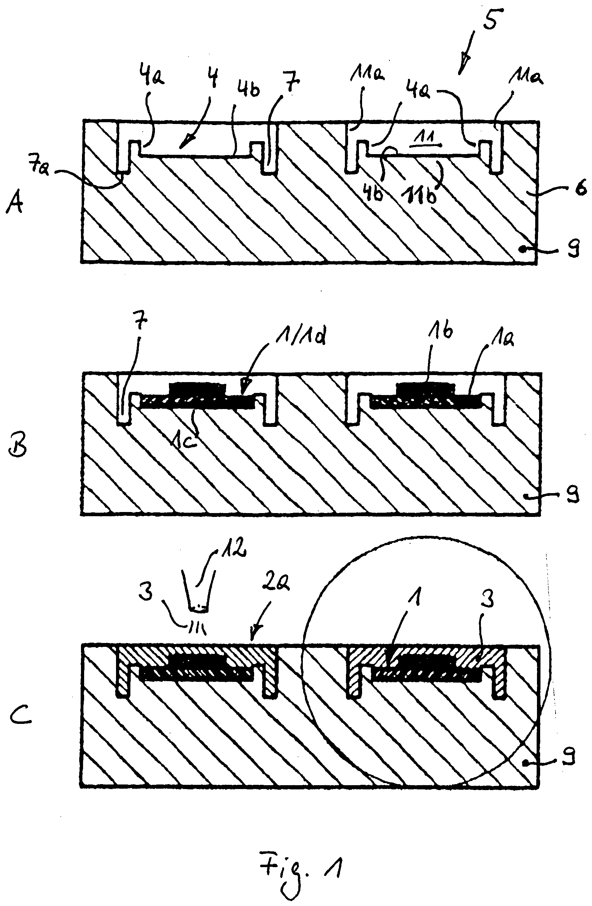

Die Figur 1 zeigt in einer Übersichtsdarstellung die einzelnen Stufen A, B, C zur Herstellung einer flexiblen Gehäuseschale gemäß dem ersten Verfahrensschritt nach der Erfindung. Dafür ist es vorliegend vorgesehen, ein Formnest 6 zu verwenden, welches aus einem flexiblen Material 9, bevorzugt mit einer Antihafteigenschaft besteht. Gerade durch die Flexibilität des Formnestes 6 wird dabei erzielt, dass eine einfache Entformung der damit hergestellten Gehäuseschale erzielt werden kann.

Gezeigt ist vorliegend in den Figuren 1 ein Querschnitt des Formnestes senkrecht zu seiner Längserstreckung, wobei die Längserstreckung in die Richtung der Länge des LED-Bandes liegt. Das LED-Band ist dabei in den Figuren 1b und c ebenso im Querschnitt senkrecht zur entsprechenden Längserstreckung dargestellt und weist einen flexiblen Leitungsträger 1a sowie darauf angeordnete elektronische Komponenten 1b, insbesondere Chip-Leuchtdioden etc. auf, insbesondere die in einem äquidistanten Abstand angeordnet sein können.

Erkennbar ist hier, dass das erfindungsgemäße Formnest 6 zwei Negativformen aufweist, die parallel nebeneinander verlaufen, so dass durch Benutzung dieses hier dargestellten Formnestes 6 zwei Gehäuseschalen zur Herstellung von zwei LED-Leuchten im ersten Verfahrensschritt gegossen werden können.

Das Formnest hat hier eine im Wesentlichen rechtwinklige Ausnehmung, bezogen auf den Querschnitt der Ausnehmung parallel zur Formnest-Oberfläche, d.h. hier im Wesentlichen senkrecht zur Blattebene. Diese Ausnehmung weist hier zwei parallele, einander gegenüberliegende lange Seitenwände 11a auf, welche somit durch ihren Abstand im Formnest die gesamte Breite der Gehäuseschale bzw. des insgesamt herzustellenden gegossenen Gehäuses definieren.

Ebenso weist die Ausnehmung zwei parallele, einander gegenüberliegende kurze Seitenwände auf, die vorliegend in der Schnittdarstellung nicht zu erkennen sind und parallel zur Blattebene angeordnet sind, demnach also die Negativform in der Länge begrenzen und somit ebenso die Länge des gesamten zu gießenden Gehäuses.

Die Ausnehmung 11 weist dabei einen Boden 7a auf, von dem beabstandet zu allen Seitenwänden eine Erhebung 11b aufsteht mit einer planen, rechtwinkligen Bodenfläche 4b, die demnach in ihrem Höhenniveau oberhalb des Ausnehmungsbodens 7a angeordnet ist und die entlang ihrer Längserstreckung, d.h. bezogen auf diese Darstellung senkrecht zur Blattebene von zwei parallelen, einander gegenüberliegenden Wänden 4a zur Ausbildung einer Nut 4 begrenzt ist.

Die Erhebung kann eine Breite aufweisen, die 75 bis 90% bevorzugt 80 bis 85 % der inneren Breite der Negativform zwischen den Seitenwänden 11a beträgt.

Bezogen auf die gesamte Breite der Negativform ist bevorzugt die Nut 4 zentrisch angeordnet. Der Abstand der einander gegenüberliegenden Wände 4a ist dabei derart gewählt, dass ein LED-Band 1, so wie es die Figur 1b zeigt, zwischen diesen beiden Wänden positioniert werden kann und demnach in der Nut geführt ist, ohne dass eine Positionsverschiebung des LED-Bandes während des Auffüllens der Negativform mit einer Vergussmasse zu befürchten ist. Darüber hinaus kann hier ein Klemmeffekt bevorzugt sein, nämlich dadurch, dass der Abstand der Nutwände 4a insbesondere geringfügig kleiner ist als die Breite des flexiblen Leitungsträgers 1a. Dadurch wird das LED-Band nach dem Eindrücken in die Nut sicher am Nutgrund 4b festgehalten, so dass es sich nicht in Wellen legen kann.

Die Figur 1b zeigt, dass in die jeweilige Negativform 5 in dem Formnest 6 die entsprechenden LED-Bänder eingelegt sind, so dass anschließend ein Vergießen mit einer Vergussmasse 3 erfolgen kann, wie es Figur 1c verdeutlicht. Dabei kann mit einem hier symbolisch angedeuteten Applikationskopf 12 eine Vergussmasse 3 in die Negativform eingefüllt werden, wofür bevorzugterweise die Auslauföffnung des Applikationskopfes 12 zentrisch bezogen auf die Breite der jeweiligen Negativform über die gesamte Länge der Form geführt wird, hier also senkrecht zur Blattebene. Die Vergussmasse trifft somit zunächst auf die Oberfläche und hier insbesondere die oberseitigen elektronischen Komponenten des LED-Bandes und umschließt diese formschlüssig, so dass durch das Vergießen und Aushärten der Vergussmasse 3 sich die Masse sicher und fest mit dem LED-Band verbindet und somit beim Entformen der Gehäuseschale 2a die Gehäuseschale zusammen mit dem LED-Band aus dem Formnest 6 entnommen wird.

Wie in der Figur 1c zu erkennen ist, wird das Befüllen der jeweiligen Negativform bzw. des Formnestes hier derart vorgenommen, dass dies bis zur Oberfläche erfolgt. Dadurch wird zum einen die Höhe des späteren Gehäuses definiert, die grundsätzlich der Ausnehmungstiefe entspricht und zum anderen ergibt sich eine Selbstnivellierung und eine plane ebene Oberfläche, die im vorliegenden Beispiel auch die Lichtaustrittsfläche des Gehäuses bildet, so dass es vorliegend an dieser Stelle auch auf eine gute Planizität ankommt. Dafür ist es bevorzugt vorgesehen, während des Ausfüllens bzw. Vergießens das Formnest 6 optimiert horizontal in der Längserstreckung auszurichten, um zu gewährleisten, dass an jeder Stelle über die Länge des Formnestes dasselbe Füllniveau erreicht wird.

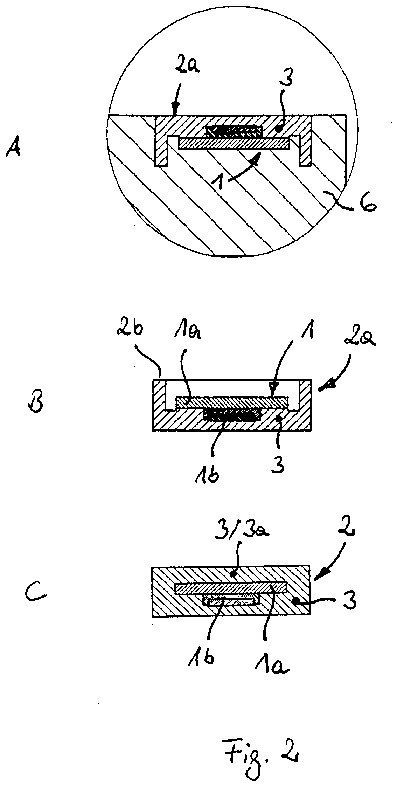

Die Figur 2a zeigt nochmals die Ausschnittdarstellung gemäß dem Kreis der Figur 1c, bei welchem die Gehäuseschale 2a innerhalb des Formnestes 6 ausgebildet ist und nach dem Aushärten, welches in einer bevorzugten Ausführung bei einer Temperatur von 40 - 50, bevorzugt 45 Grad, erfolgt, entformt werden kann.

Die Figur 2b zeigt die entformte Gehäuseschale, die gegenüber der Darstellung in der Figur 2a um 180 Grad gedreht ist und somit eine nach oben offene Gehäuseschale 2a ausbildet, in welcher die Oberseite des LED-Bandes nunmehr nach unten weist. Erkennbar ist, dass sich zwischen den Oberkanten 2b der ausgebildeten Gehäuseschale 2a und der Unterseite des LED-Bandes (1) ein innerer Freiraum ergibt, der seitlich durch die Wandbereiche unterhalb der Oberkante 2b in der Breite definiert ist und in der Länge begrenzt ist durch hier im Schnitt nicht dargestellte Stirnseiten.

Der innere Freiraum kann nunmehr gemäß Figur 2c aufgefüllt werden mit einer anderen Vergussmasse 3a oder auch mit derselben Vergussmasse 3. Das Auffüllen erfolgt dabei bis zum Niveau der Oberkante 2b der Gehäuseschale, so dass sich im Anschluss nach dem Aushärten insgesamt eine hermetisch vergossene Gehäuseform mit rechteckigem Querschnitt gemäß der Figur 2c ergibt, in welchem etwa zentral das LED-Band integriert ist.

Dabei sind stirnseitig in einer hier nicht dargestellten Ebene die Anschlusskabel zur Stromversorgung des LED-Bandes aus dem gegossenen Gehäuse herausgeführt, wofür die Negativform bzw. das Formnest einen entsprechend, bereits eingangs beschriebenen Kanal aufweisen kann, in welchem die Zuleitungen eingelegt werden können.

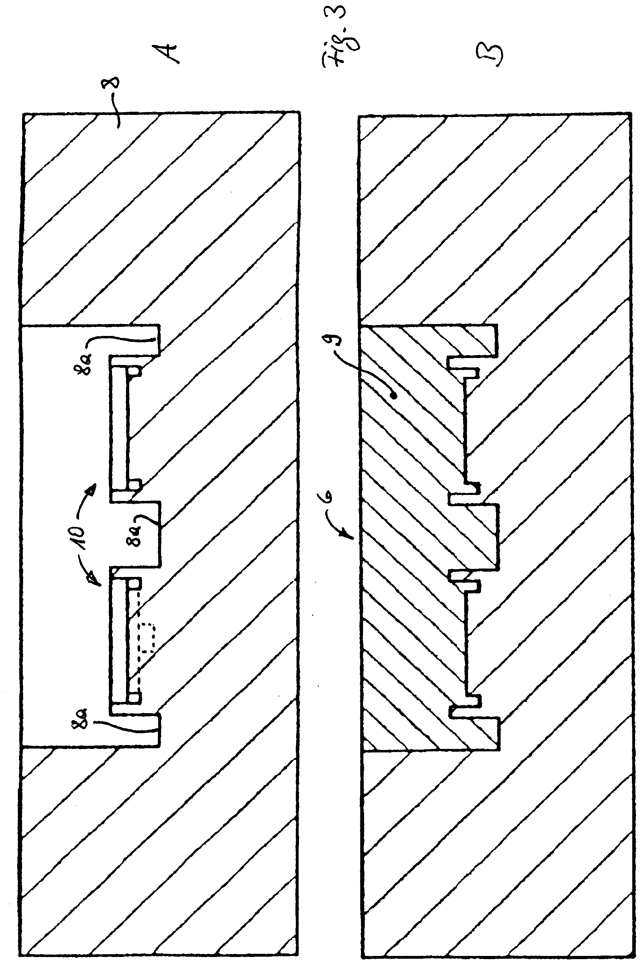

Die Figur 3 zeigt in der oberen Darstellung A eine Metallgussform 8, die die exakte Negativform des zuvor beschriebenen flexiblen Formnestes 6 darstellt. Hier ist erkennbar, dass diese Metallgussform 8 zwei nebeneinander liegende Positivformen 10 der Gehäuseschale 2a mit integriertem LED-Band aufweist, die sich vom Grund 8a der Metallgussform 8 nach oben erheben. Der spätere Platz des LED-Bandes ist in dieser Positivform von Metall besetzt und in der linken Positivform gestrichelt angedeutet.

Diese Positivform der Gehäuseschale kann dabei beispielsweise durch spanende Bearbeitung eines Metallblockes 8 zur Ausbildung der Metallgussform hergestellt werden und anschließend durch Ausfüllen mit einer flexibel aushärtenden Vergussmasse 9 das zuvor beschriebene flexible Formnest 6 hergestellt werden. Das Formnest 6 stellt demnach die Negativform der Gehäuseschale 2a dar, so dass aus diesem flexiblen Formnest 6 wiederum Positivformen durch Auffüllen mit den Vergussmassen 3, wie zuvor beschrieben, hergestellt werden können.

Es ist darauf hinzuweisen, dass die hier gewählte Darstellung von zwei Negativformen im Formnest 6 gemäß der Figur 1 bzw. von zwei Positivformen in der Metallgussform 8 gemäß Figur 3 nur ein nicht beschränkendes Beispiel der Erfindung zeigt. Es ist grundsätzlich möglich, entsprechende Formen mit lediglich nur einer Negativ- bzw. Positivform zu verwenden, ebenso wie entsprechende Gussformen bzw. Formnester mit mehr als den hier im Beispiel gezeigten zwei Formen.

Dabei sind die jeweiligen Negativ- bzw. Positivformen im Formnest bzw. der Metallgussform, bezogen auf die Längserstreckung parallel zueinander angeordnet. Die grundsätzliche Länge, mit welcher LED-Leuchten mit einem verfahrensgemäß hergestellten allseitig vergossenen Gehäuse hergestellt werden können, ist grundsätzlich unbeschränkt und allenfalls in der Praxis begrenzt durch die am Ort der Herstellung gegebene Verfahrweite eines Applikationskopfes zum Einfüllen der Vergussmassen in das Formnest, die Metallgussformen bzw. die verfahrensgemäß hergestellte Gehäuseschale.

In dem hier beschriebenen Beispiel stellt die Oberseite des LED-Bandes, welches die elektronischen Komponenten und Chip-Leuchtdioden aufweist die erste Seite gemäß der allgemeinen Beschreibung dar und die im wesentlichen plane Unterseite des Leitungsträger die zweite Seite.

## Patentansprüche

1. Verfahren zur Herstellung einer LED-Leuchte, bei dem wenigstens ein LED-Band (1) zur Ausbildung eines Gehäuses (2) allseitig mit wenigstens einer Vergussmasse (3) vergossen wird, wobei das LED-Band (1) einen flexiblen Leitungsträger (1a) mit darauf angeordneten Chip-Leuchtdioden (1b), Leiterbahnen und elektronische Komponenten umfasst, **dadurch gekennzeichnet, dass**
a. in einem ersten Verfahrenschritt wenigstens eine ein LED-Band (1) an den oberseitigen elektronischen Komponenten formschlüssig aufnehmende flexible Gehäuseschale (2a) gegossen wird
i. wobei ein LED-Band (1) mit seiner Unterseite (1c) in eine der Länge des zu vergießenden LED-Bandes (1) entsprechenden Führungsnut (4) mit zwei parallelen Nutwänden (4a) formschlüssig eingelegt wird, die in einer Negativform (5) der Gehäuseschale (2a) in einem flexiblen Formnest (6) ausgebildet ist und das flexible Formnest (6) oberflächenbündig zur Ausbildung einer selbstnivellierten, planen, ebenen, die Lichtaustrittfläche des Gehäuses bildenden Oberfläche mit einer flexibel aushärtenden Vergussmasse (3) aufgefüllt wird, die sich formschlüssig an die, die elektronischen Komponenten aufweisende Oberseite (1d) des eingelegten LED-Bandes (1) anlegt
ii. und nach Aushärten der Vergussmasse (3) die Gehäuseschale (2a) zusammen mit dem oberseitig umgossenen LED-Band (1) aus dem flexiblen Formnest (6) entformt wird
b. und in einem zweiten Verfahrensschritt die gegossene flexible Gehäuseschale (2a) mit einer flexiblen Vergussmasse (3a), bis zu ihrer im ersten Verfahrensschritt definierten Oberkante (2b) aufgefüllt wird, die sich beim Auffüllen unterseitig und seitlich formschlüssig an das LED-Band (1) anlegt, und dass beim Einfüllen der Vergussmasse (3) in die Negativform (5) bzw. das flexible Formnest (6) im ersten Verfahrenschritt die Vergussmasse (3) in einen den Nutboden (4b) und die beiden Nutwände (4a) aussen umgebenden Graben (7) einläuft, dessen Grabengrund (7a) im Formnest (6) tiefer liegt als der Nutboden (4b), auf dem das LED-Band (1) liegt und der Grabengrund (7a) die Oberkante (2b) der Gehäuseschale (2a) definiert.

2. Verfahren nach Anspruch 1, **dadurch gekennzeichnet, dass** die Nutwände (4a) der Führungsnut (4) Aussparungen aufweisen, durch welche die Vergussmasse (3) beim Auffüllen der Negativform (5) bzw. des Formnestes (6) im ersten Verfahrensschritt hindurchläuft und in den neben der Führungsnut (4) angeordneten Graben (7) eindringt.

3. Verfahren nach einem der vorherigen Ansprüche, **dadurch gekennzeichnet, dass** für das Vergießen im ersten und zweiten Verfahrensschritt verschiedene flexibel aushärtende Vergussmassen (3, 3a) verwendet werden.

4. Verfahren nach einem der vorherigen Ansprüche, **dadurch gekennzeichnet, dass** für das Vergießen im ersten und zweiten Verfahrensschritt dieselbe flexibel aushärtende Vergussmassen (3) verwendet werden wobei die Vergussmasse (3) bei wenigstens einem der Verfahrensschritte eine zugemischte Funktionskomponente aufweist.

5. Verfahren nach Anspruch 4, **dadurch gekennzeichnet, dass** im zweiten Verfahrensschritt die Vergussmasse (3a) eine die Wärmeleitfähigkeit verbessernden Komponente aufweist.

6. Verfahren nach Anspruch 4 oder 5, **dadurch gekennzeichnet, dass** im ersten Verfahrensschritt die Vergussmasse (3) eine die Transparenz beeinflussende Komponente aufweist.

7. Verfahren nach einem der vorherigen Ansprüche, **dadurch gekennzeichnet, dass** im ersten und/oder zweiten Verfahrenschritt eine Vergussmasse (3, 3a) mittels eines Applikationskopfes eingefüllt wird, welcher das Einfüllen vornimmt, während er automatisch mittels einer übergeordneten Steuerung an der Negativform (5) oder dem Formnest (6) oder der Gehäuseschale (2a) entlanggeführt wird.

8. Verfahren nach Anspruch 7, **dadurch gekennzeichnet, dass** eine Vergussmasse (3, 3a) kurz vor oder im Applikationskopf aus wenigstens zwei Komponenten gemischt wird.

9. Verfahren nach einem der vorherigen Ansprüche, **dadurch gekennzeichnet, dass** das flexible Formnest (6) hergestellt wird durch Auffüllen einer Metall-Gussform (8) mit einer flexibel aushärtenden Formnest-Vergussmasse (9), um wenigstens eine durch spanende Metallbearbeitung in der Metall-Gussform (8) eingearbeitete Positivform (10) der Gehäuseschale (2a) abzuformen, die sich vom Grund (8a) der Metallgussform (8) nach oben erstreckt.

10. Formnest umfassend wenigstens eine Negativform (5) zur Abformung mit einer Vergussmasse (3) für die Herstellung einer LED-Leuchte mit einem Verfahren gemäß einem der vorherigen Ansprüche, **dadurch gekennzeichnet, dass** es aus einem flexiblen gegossenen Körper (9) besteht und wenigstens eine Ausnehmung (11) aufweist mit zwei parallelen einander gegenüberliegenden langen Seitenwänden (11a) und zwei parallelen einander gegenüberliegenden kurzen Seitenwänden und mit einem Boden (7a), von dem beabstandet zu allen Seitenwänden (11a) eine Erhebung (11b) aufsteht, mit einer planen rechtwinkligen Bodenfläche (4b), die entlang ihrer Längserstreckung von zwei parallelen einander gegenüberliegenden Wänden (4a) zur Ausbildung einer Nut (4) begrenzt ist, wobei der Abstand der einander gegenüberliegenden Wände (4a) angepasst ist an die Breite eines LED-Bandes (1), welches mit seiner Unterseite auf die Bodenfläche (4b) zwischen die Wände (4a) auflegbar ist.

11. Formnest nach Anspruch 10, **dadurch gekennzeichnet, dass** die Höhe der Wände (4a) über der Bodenfläche (4b) 1 bis 20 % größer ist, als die Dicke des flexiblen Leitungsträgers (1a) eines LED-Bandes (1).

12. Formnest nach einem der vorherigen Ansprüche 10 oder **dadurch gekennzeichnet, dass** die Wände (4a) Durchbrüche aufweisen,die von der Wandoberseite bis zur Bodenfläche (4b) reichen.

13. Formnest nach einem der vorherigen Ansprüche 10 bis 12, **dadurch gekennzeichnet, dass** parallel zur Längserstreckung einer Negativform (5) ein Kanal im Formnest (6) angeordnet ist, der in eine der kurzen Seitenwände der Ausnehmung (11) mündet, in den ein Anschlusskabel eines LED-Bandes (1) einlegbar ist.

14. Metallgussform (8), **dadurch gekennzeichnet, dass** sie die Negativform eines Formnestes (6) nach einem der vorherigen Ansprüche 10 bis 13 aufweist.

## Claims

1. Method for producing an LED luminaire, in which method at least one LED strip (1) is potted with at least one potting compound (3) on all sides in order to form a housing (2), wherein the LED strip (1) comprises a flexible circuit board (1a) width - arranged thereon - chip light-emitting diodes (1b), conductor tracks and electronic components, **characterized in that**
a. in a first method step at least one flexible housing shell (2a) accommodating an LED strip (1) in a positively locking manner at the top-side electronic components is moulded,
i. wherein an LED strip (1) is inserted in a positively locking manner by its underside (1c) into a guide groove (4) having two parallel groove walls (4a), said guide groove corresponding to the length of the LED strip (1) to be potted and being formed in a negative mould (5) of the housing shell (2a) in a flexible mould cavity (6), and the flexible mould cavity (6) is filled with a flexibly curing potting compound (3) in a surface-flush manner in order to form a self-levelled, planar, flat surface forming the light exit surface of the housing, said potting compound attaching in a positively locking manner to the top side (1d) of the inserted LED strip (1), said top side having the electronic components,
ii. and, after the curing of the potting compound (3), the housing shell (2a) together with the LED strip (1) encapsulated by moulding on the top side is removed from the flexible mould cavity (6),
b. and in a second method step the moulded flexible housing shell (2a) is filled with a flexible potting compound (3a) up to its upper edge (2b) defined in the first method step, said potting compound attaching to the LED strip (1) in a positively locking manner laterally and on the underside during the filling process,
and **in that** during the process of introducing the potting compound (3) into the negative mould (5) or the flexible mould cavity (6) in the first method step, the potting compound (3) runs into a trench (7) externally surrounding the groove base (4b) and the two groove walls (4a), the trench bottom (7a) of said trench lying deeper in the mould cavity (6) than the groove base (4b), on which the LED strip (1) lies, and the trench bottom (7a) defines the upper edge (2b) of the housing shell (2a).

2. Method according to Claim 1, **characterized in that** the groove walls (4a) of the guide groove (4) have cutouts through which the potting compound (3) passes during the process of filling the negative mould (5) or the mould cavity (6) in the first method step and penetrates into the trench (7) arranged alongside the guide groove (4).

3. Method according to either of the preceding claims, **characterized in that** different flexibly curing potting compounds (3, 3a) are used for the potting in the first and second method steps.

4. Method according to any of the preceding claims, **characterized in that** the same flexibly curing potting compounds (3) are used for the potting in the first and second method steps, wherein the potting compound (3) comprises an admixed functional component in at least one of the method steps.

5. Method according to Claim 4, **characterized in that,** in the second method step, the potting compound (3a) comprises a component that improves the thermal conductivity.

6. Method according to Claim 4 or 5, **characterized in that,** in the first method step, the potting compound (3) comprises a component that influences the transparency.

7. Method according to any of the preceding claims, **characterized in that,** in the first and/or second method step, a potting compound (3, 3a) is introduced by means of an application head that performs the introducing process while it is guided along the negative mould (5) or the mould cavity (6) or the housing shell (2a) automatically by means of a superordinate controller.

8. Method according to Claim 7, **characterized in that** a potting compound (3, 3a) is mixed from at least two components shortly before or in the application head.

9. Method according to any of the preceding claims, **characterized in that** the flexible mould cavity (6) is produced by filling a metal mould (8) with a flexibly curing mould cavity potting compound (9) in order to mould at least one positive mould (10) of the housing shell (2a) which has been worked in the metal mould (8) by metal machining and which extends upwards from the bottom (8a) of the metal mould (8).

10. Mould cavity comprising at least one negative mould (5) for moulding with a potting compound (3) for the production of an LED luminaire by a method according to any of the preceding claims, **characterized in that** said mould cavity consists of a flexible moulded body (9) and has at least one recess (11) having two parallel long sidewalls (11a) opposite one another and two parallel short sidewalls opposite one another and having a base (7a), from which an elevation (11b) rises at a distance from all the sidewalls (11a), having a planar rectangular base surface (9b), which is delimited along its longitudinal extent by two parallel walls (4a) opposite one another in order to form a groove (4), wherein the distance between the walls (4a) opposite one another is adapted to the width of an LED strip (1) which is able to be placed by its underside onto the base surface (4b) between the walls (4a).

11. Mould cavity according to Claim 10, **characterized in that** the height of the walls (4a) above the base surface (4b) is 1 to 20% greater than the thickness of the flexible circuit board (1a) of an LED strip (1).

12. Mould cavity according to either of the preceding Claims 10 and 11, **characterized in that** the walls (4a) have perforations extending from the wall top side as far as the base surface (4b).

13. Mould cavity according to any of the preceding Claims 10 to 12, **characterized in that** parallel to the longitudinal extent of a negative mould (5) a channel is arranged in the mould cavity (6), which channel leads into one of the short sidewalls of the recess (11), and into which a connecting cable of an LED strip (1) is able to be inserted.

14. Metal mould (8), **characterized in that** it comprises the negative mould of a mould cavity (6) according to any of the preceding Claims 10 to 13.

## Revendications

1. Procédé de fabrication d'un luminaire à diodes, pour lequel au moins une bande de diodes (1) est coulée de tous côtés avec au moins une masse coulable (3) pour former un boîtier (2), la bande de diodes (1) comprenant un porte-conducteur (1a) souple avec des diodes électroluminescentes à puce (1b) disposées dessus, des pistes conductrices et des composants électroniques, **caractérisé en ce que**
a) dans une première étape du procédé au moins une coque de boîtier (2a) souple est coulée recevant par conformité de forme une bande de diodes (1) sur les composants électroniques supérieurs
i. une bande de diodes (1) étant introduite par conformité de forme avec sa face inférieure (1c) dans une rainure de guidage (4) correspondant à la longueur de la bande de diodes (1) à couler avec deux parois de rainure parallèles (4a), qui est constituée dans un moule femelle (5) de la coque de boîtier (2a) dans un moule de fabrication souple (5) et le moule de fabrication souple (6) étant rempli au ras de la surface avec une masse coulable (3) durcie de façon souple pour former une surface autonivelante, plane, uniforme formant la surface de sortie de lumière du boîtier, qui s'applique par conformité de forme à la face supérieure (1d) de la bande de diodes (1) introduite, comportant les composants électroniques
ii. et après durcissement de la masse coulable (3), la coque de boîtier (2a) étant démoulée du moule de fabrication (6) souple avec la bande de diodes (1) recouverte sur la face supérieure
b) et dans une deuxième étape de procédé, la coque de boîtier souple coulée (2a) est remplie d'une masse coulable souple (3a) jusqu'à son bord supérieur (2b) défini dans la première étape de procédé, qui s'applique sur la face inférieure et latéralement par conformité de forme à la bande de diodes (1) lors du remplissage, et **en ce que**
lors de l'introduction de la masse coulable (3) dans le moule femelle (5) ou le moule de fabrication souple (6) dans la première étape de procédé, la masse coulable (3) s'introduit dans une rigole (7) entourait extérieurement le fond de rainure (4b) et les deux parois de rainure (4a), dont le fond de rigole (7a) se situe plus profondément dans le moule de fabrication (6) que le fond de rainure (4b) sur lequel se trouve la bande de diodes (1) et le fond de rigole (7a) définit le bord supérieur (2b) de la coque de boîtier (2a).

2. Procédé selon la revendication 1, **caractérisé en ce que** les parois de rainure (4a) de la rainure de guidage (4) comportent des cavités à travers lesquelles s'introduit la masse coulable (3) dans la première étape de procédé lors du remplissage du moule femelle (5) ou moule de fabrication (6) et s'infiltre dans la rigole (7) disposée à côté de la rainure de guidage (4).

3. Procédé selon l'une quelconque des revendications précédentes, **caractérisé en ce que** différentes masses coulables (3,3a) durcies de façon souple sont utilisées pour l'enrobage dans la première et la deuxième étape de procédé.

4. Procédé selon l'une quelconque des revendications précédentes, **caractérisé en ce que** les mêmes masses coulables (3) durcies de façon souple sont utilisées pour l'enrobage dans la première et la deuxième étape de procédé, la masse coulable (3) comportant au moins pour une des étapes de procédé un composant fonctionnel ajouté.

5. Procédé selon la revendication 4, **caractérisé en ce que** dans la deuxième étape de procédé, la masse coulable (3a) comporte un composant améliorant la conductibilité thermique.

6. Procédé selon la revendication 4 ou 5, **caractérisé en ce que** dans la première étape de procédé, la masse coulable (3) comporte un composant influençant la transparence.

7. Procédé selon l'une quelconque des revendications précédentes, **caractérisé en ce que** dans la première et/ou la deuxième étape de procédé, une masse coulable (3,3a) est introduite au moyen d'une tête d'application, laquelle procède à l'introduction, pendant qu'elle est automatiquement guidée au moyen d'une commande prioritaire sur le moule femelle (5) ou le moule de fabrication (6) ou le long de la coque de boîtier (2a).

8. Procédé selon la revendication 7, **caractérisé en ce qu'**une masse coulable (3, 3a) est mélangée à partir d'au moins deux composants peu savant ou dans la tête d'application.

9. Procédé selon l'une quelconque des revendications précédentes, **caractérisé en ce que** le moule de fabrication souple (6) est fabriqué par remplissage d'un moule de coulée métallique (8) avec une masse coulable de moule de fabrication (9) durcie de façon souple pour modeler au moins un moule positif (10) de la coque de boîtier (2a) élaboré par usinage du métal par enlèvement de copeaux dans le moule de coulée métallique (8), qui s'étend vers le haut depuis le fond (8a) du moule de coulée métallique (8).

10. Moule de fabrication comprenant au moins un moule femelle (5) pour modelage avec une masse coulable (3) pour la fabrication d'un luminaire à diodes avec un procédé selon l'une quelconque des revendications précédentes, **caractérisé en ce qu'**il est composé d'un corps coulé souple (9) et comporte au moins un évidement (11) avec deux parois latérales (11a) longues parallèles opposées l'une à l'autre et deux parois latérales courtes parallèles opposées l'une à l'autre et avec un fond (7a) duquel s'élève une élévation (11b) à distance de toutes les parois latérales (11a), avec une surface de fond (4b) plane rectangulaire, qui est limitée le long de son extension longitudinale par deux parois (4a) parallèles opposées l'une à l'autre pour former une rainure (4), la distance des parois (4a) opposées l'une à l'autre étant adaptée à la largeur d'une bande de diodes (1), laquelle peut être posée entre les parois (4a) avec sa face inférieure sur la surface de fond (4b).

11. Moule de fabrication selon la revendication 10, **caractérisé en ce que** la hauteur des parois (4a) au-dessus de la surface du fond (4b) est 1 à 20 % plus grande que l'épaisseur du porte-conducteur souple (1a) d'une bande de diodes (1).

12. Moule de fabrication selon l'une quelconque des revendications précédentes 10 ou 11, **caractérisée en ce que** les parois (4a) comportent des passages qui vont du côté supérieur de paroi jusqu'à la surface de fond (4b).

13. Moule de fabrication selon l'une quelconque des revendications précédentes 10 à 12, **caractérisé en ce que** parallèlement à l'extension longitudinal d'un moule femelle (5) un conduit est disposé dans le moule de fabrication (6) qui débouche dans une des parois latérales courtes de l'évidement (11) dans lequel peut être introduit un câble de connexion d'une bande de diodes (1).

14. Moule de coulée métallique (8), **caractérisé en ce qu'**il comporte le moule femelle d'un moule de fabrication (6) selon l'une quelconque des revendications précédentes 10 à 13.
